# EUROPEAN PATENT APPLICATION

(11) **EP 4 825 695 A1**
(43) Date of publication of application: **21.10.2026**
(21) Application number: 26171845.6
(22) Date of filing: 13.04.2026
(51) Int. Cl.: B60W 60/00

(54) **MOVING OBJECT CONTROL SYSTEM, CONTROL METHOD THEREOF, MOVING OBJECT, AND COMPUTER PROGRAM**

(30) Priority: 14.04.2025 JP 2025066449
(71) Applicant: HONDA MOTOR CO., LTD., Tokyo 105-8404 (JP)
(72) Inventor: AIZAWA, Koki, Saitama, 3510193 (JP)
(74) Representative: Kiwit, Benedikt

(57) **Abstract**

A moving object control system that controls an operation of a moving object acquires a plurality of candidate trajectories that are candidates for a trajectory of a traveling route from a position of the moving object, selects candidate trajectories not causing collision with an obstacle from among the plurality of candidate trajectories; and determines a specific candidate trajectory as a route of the moving object by using each of the selected candidate trajectories and a reward function that outputs a reward for an action of the moving object. The reward function includes a reward function for implementing a policy corresponding to an action of an operator, and the system calculates a reward for each of the selected candidate trajectories using the reward function, and determines the specific candidate trajectory using the calculated reward.

## Description

### BACKGROUND OF THE INVENTION

### Field of the Invention

The present invention relates to a moving object control system, a control method thereof, a moving object, and a computer program.

### Description of the Related Art

In these years, compact moving objects (micro mobility vehicles) for supporting movements of people in small regions have been known. Such moving objects include a moving object that has an autonomous movement technique for a free space such as a sidewalk, which is a region where a pedestrian moves, in addition to an automated driving technique for traveling on a roadway (Japanese Patent Laid-Open No. 2024-064218). It is assumed that various obstacles including pedestrians are present in an advancing direction of the moving object, and it is necessary to generate a route with a high degree of freedom for flexibly avoiding the various obstacles.

Meanwhile, reinforcement learning is a learning method for learning the optimal action according to a reward that an agent receives from an environment, and it is necessary for a designer of an algorithm to design an appropriate reward. However, there is also a case where it is not easy to design a reward when the reinforcement learning algorithm is applied to a certain problem. In such a situation, a technique for generating a route of a moving object based on an appropriate reward is desired.

### SUMMARY OF THE INVENTION

The present invention has been made in view of the above problem, and an object thereof is to implement a technique capable of determining a route of a moving object based on an appropriate reward.

The present invention in its first aspect provides a moving object control system as specified in claims 1 to 13.

The present invention in its second aspect provides a moving object as specified in claim 14.

The present invention in its third aspect provides a control method of a moving object control system as specified in claim 15.

The present invention in its fourth aspect provides a computer program as specified in claim 16.

Further features of the present invention will become apparent from the following description of exemplary embodiments (with reference to the attached drawings).

### BRIEF DESCRIPTION OF THE DRAWINGS

FIGS. 1A and 1B are diagrams illustrating a configuration example of a moving object according to an embodiment of the present invention;
FIG. 2 is a block diagram illustrating a configuration example of a control system of the moving object according to the embodiment;
FIG. 3 is a block diagram illustrating a functional configuration example related to a control unit of the moving object according to the embodiment;
FIG. 4 is a view schematically illustrating an example of a grid map according to the embodiment;
FIG. 5 is a diagram for describing reward estimation according to the embodiment;
FIG. 6 is a view for describing an example of a dynamic window approach according to the embodiment;
FIG. 7 is a view for describing route generation processing according to the embodiment;
FIG. 8 is a view schematically describing an estimated reward and a determined trajectory according to the embodiment;
FIG. 9 is a flowchart illustrating a series of operations of the route generation processing of the moving object according to the embodiment; and
FIG. 10 is a flowchart illustrating a series of operations of processing of determining the optimal trajectory according to the embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

In the following embodiment, a case where a micro mobility vehicle is used as an example of a moving object will be described as an example. The micro mobility vehicle may be an electric vehicle having a riding capacity of about one person, or may be a vehicle that travels carrying baggage along with a person, instead of carrying the person on board. The present embodiment is not limited to an example in which the moving object is an electric vehicle, and is applicable to any moving object other than the electric vehicle. Furthermore, in the following description, a moving object including one follower wheel will be described as an example, but the follower wheel is not necessarily provided, and the number of follower wheels is not limited to one and may be two or more. Furthermore, the moving object is not limited to a vehicle, and may include a robot capable of autonomous movement (for example, capable of walking).

In the above-described moving object, it is useful if autonomous traveling is implemented in consideration of not using a high-precision map. For example, since the moving object not only travels on a specifically determined route but also travels in both a movement region for vehicles and a movement region for pedestrians, there is a need to appropriately travel even in a region where no high-precision map is prepared. In addition, for example, as in a case of traveling in a shopping mall or an event venue, there is a need to travel while appropriately avoiding a plurality of obstacles in a situation in which the obstacles are irregularly present.

In the present embodiment, in order to satisfy such a requirement, a route of the moving object that maximizes a reward function or an evaluation function is generated. There is a case where it is difficult to design a reward when a reinforcement learning algorithm is used or optimal control is performed. In the present embodiment, an appropriate reward in an environment is estimated by inverse reinforcement learning based on an action by a person (operator) (for example, the operator's operation on the moving object), and the route of the moving object is determined based on the obtained reward. This makes it possible to give a reward that imitates a human action to a system. Then, the moving object can determine the route as if the moving object acts according to a human operation.

### <Configuration of moving object>

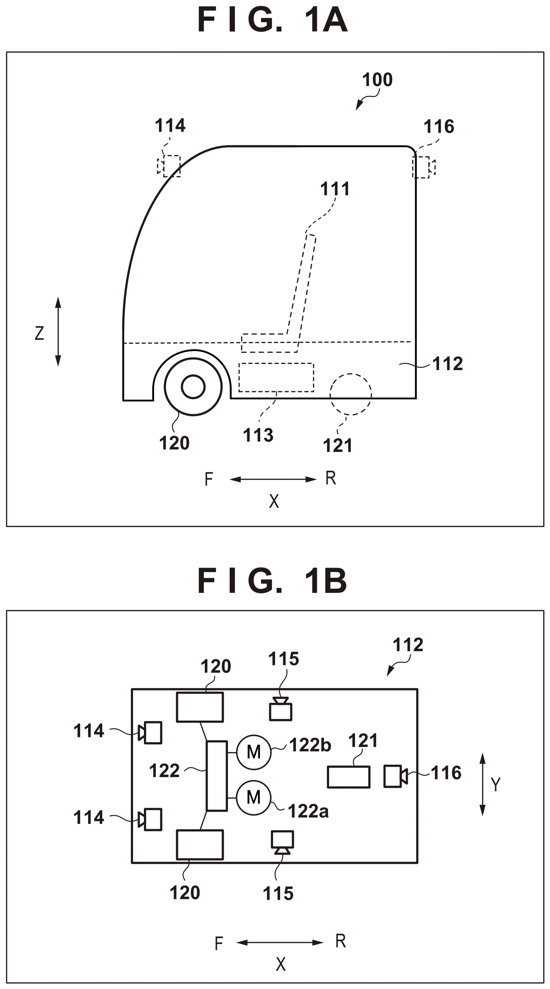

A configuration of a moving object 100 will be described with reference to FIGS. 1A and 1B. FIG. 1A illustrates a side view of the moving object 100 according to the present embodiment, and FIG. 1B illustrates an internal configuration of the moving object 100. In the drawings, arrow X indicates a front-and-rear direction of the moving object 100, F indicates the front, and R indicates the rear. Arrows Y and Z respectively indicate a width direction (a left- and-right direction) and an up-and-down direction of the moving object 100.

The moving object 100 includes a traveling unit 112, and autonomously moves using a battery 113 as a main power supply. The battery 113 is, for example, a secondary battery such as a lithium ion battery, and the moving object 100 autonomously travels by the traveling unit 112 with electric power supplied from the battery 113. The traveling unit 112 has a form of a three-wheeled vehicle provided with a pair of left and right drive wheels 120, which are front wheels, and one follower wheel 121, which is a rear wheel. Note that the traveling unit 112 may have another form such as a form of a four-wheeled vehicle. The moving object 100 is provided with, for example, a seat for one person 111.

The traveling unit 112 includes a drive mechanism 122. The drive mechanism 122 is a mechanism that rotates a corresponding drive wheel 120 with motors 122a and 122b as drive sources. By rotating each of the drive wheels 120, the drive mechanism 122 can move the moving object 100 forward or backward. The drive mechanism 122 can also change an advancing direction of the moving object 100 by generating a difference in rotation between the motors 122a and 122b. The traveling unit 112 includes the follower wheel 121. The follower wheel can make a turn with a Z direction as a rotation axis.

The moving object 100 includes detection units 114 to 116, each of which detects a target object in the surroundings of the moving object 100. The detection units 114 to 116 form an external sensor group that monitors the periphery of the moving object 100. In the case of the present embodiment, each of the detection units 114 to 116 is an imaging device that captures an image in the surroundings of the moving object 100, and includes, for example, an optical system such as a lens and an image sensor. However, instead of or in addition to the imaging device, a radar or light detection and ranging (LiDAR) can also be used.

For example, two detection units 114 are arranged in a front portion of the moving object 100 to be spaced apart from each other in a Y direction, and are mainly used to detect a target object in front of the moving object 100. The detection units 115 are arranged in a left portion and a right portion of the moving object 100, and are mainly used to detect target objects on the sides of the moving object 100. The detection unit 116 is arranged in a rear portion of the moving object 100, and is mainly used to detect a target object behind the moving object 100.

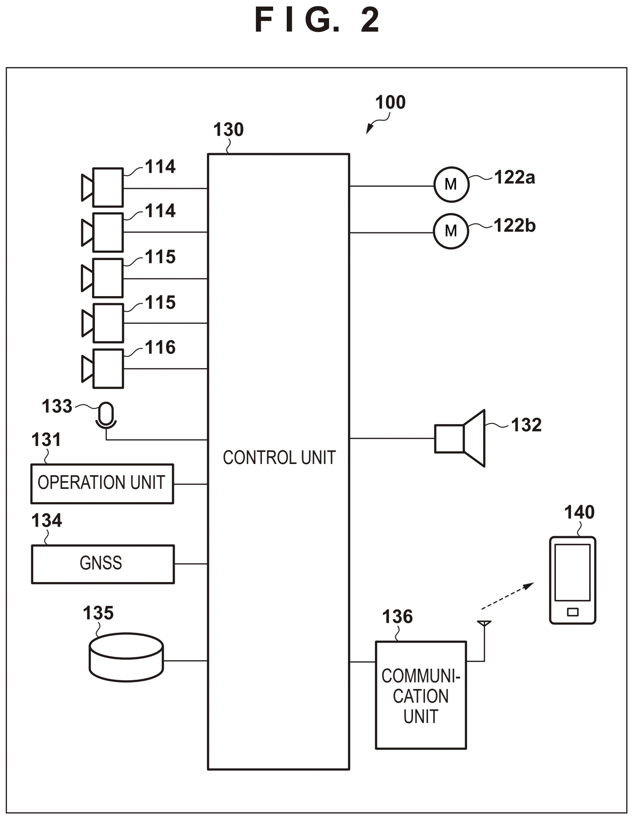

FIG. 2 is a block diagram of a control system of the moving object 100. The moving object 100 includes a control unit (ECU) 130. The control unit 130 includes one or more processors represented by a CPU, a memory device (storage medium) such as a semiconductor memory, an interface with an external device and the like. The memory device stores a program to be executed by the processor, data to be used by the processor for processing and the like. A plurality of sets of the processor, the memory device, and the interface may be provided for an individual function of the moving object 100 to be capable of communicating with each other.

The control unit 130 acquires outputs (for example, image information) from the detection units 114 to 116, input information with respect to an operation unit 131, voice information from a voice input device 133 and the like, and executes processing corresponding to each piece of the information. The control unit 130 performs control of the motors 122a and 122b (travel control of the traveling unit 112) and display control of a display panel included in the operation unit 131, gives a notification to an occupant of the moving object 100 by voice, and outputs information. The control unit 130 may perform processing using a machine learning model for image recognition (for example, a deep neural network) on the image information from the detection units 114 to 116. In addition, the control unit 130 may perform processing using the machine learning model for voice recognition (for example, the deep neural network) on the voice information from the voice input device 133.

The voice output device 132 includes, for example, a speaker, and outputs a voice in response to an instruction from the control unit 130. The voice input device 133 includes, for example, a microphone, and collects a voice of the occupant of the moving object 100. The control unit 130 can recognize the input voice and execute corresponding processing. A global navigation satellite system (GNSS) sensor 134 receives a GNSS signal, and detects a current position of the moving object 100.

A storage device 135 includes a non-volatile storage medium that stores various types of data. The storage device 135 may also store a program to be executed by the processor, data to be used by the processor for processing and the like. The storage device 135 may store various parameters (for example, trained parameters of the deep neural network, hyperparameters and the like) of the machine learning model for voice recognition or image recognition to be executed by the control unit 130.

A communication device 136 is a communication device capable of communicating with an external device (for example, a communication terminal 140 owned by a user) via wireless communication, such as Wi-Fi or 5th generation mobile communication.

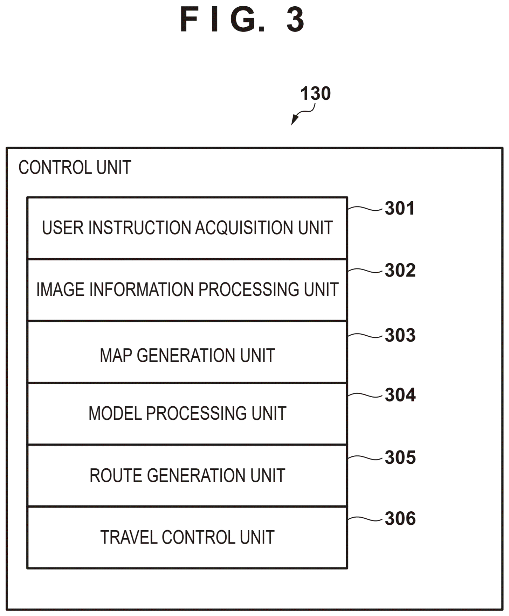

Next, a functional configuration example regarding the control unit 130 will be described with reference to FIG. 3. The control unit 130 includes, for example, a user instruction acquisition unit 301, an image information processing unit 302, a map generation unit 303, a model processing unit 304, a route generation unit 305, and a travel control unit 306.

The user instruction acquisition unit 301 acquires a user instruction input via the operation unit 131 or the voice input device 133. The user instruction includes designation of a final target position at which the moving object 100 should arrive. The final target position may be a position of a target object designated by an utterance voice among target objects recognized in the images output by the detection units 114 to 116. In addition, the user instruction may include a change instruction for a traveling trajectory, such as a right turn, a left turn, acceleration, or deceleration, during traveling of the moving object 100.

The image information processing unit 302 recognizes positions, shapes, and the like of a traveling path and an obstacle based on the outputs (for example, image information) of the detection units 114 to 116. The recognition of the positions, shapes, and the like of the traveling path and the obstacle in front of the moving object 100 is performed, for example, by obtaining a depth distance from the moving object 100 using a stereo image obtained from the two detection units 114. In order to recognize the traveling path and the obstacle, a machine learning model (for example, a deep neural network) for image recognition trained in advance may be used with a monocular image or a stereo image. The image information processing unit 302 may recognize, as a static obstacle, an obstacle which is static without any change in position, such as a step or a wall, among the recognized obstacles, using the machine learning model for image recognition. In addition, the image information processing unit 302 may recognize, as a dynamic obstacle, an obstacle whose position may dynamically change, such as a pedestrian or a bicycle, among the recognized obstacles, using the machine learning model for image recognition.

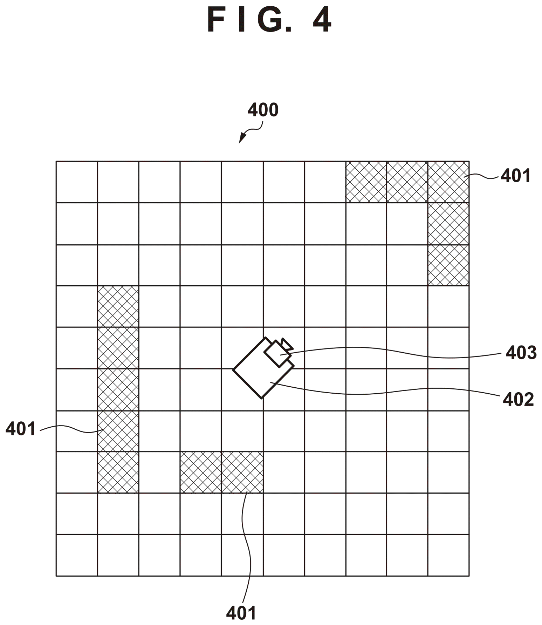

The map generation unit 303 generates a grid map representing a travelable region and a non-travelable region of the moving object 100 in the vicinity of the moving object 100 based on the positions, shapes, and the like of the traveling path and the obstacle recognized by the image information processing unit 302. FIG. 4 schematically illustrates an example of the grid map according to the present embodiment. The example illustrated in FIG. 4 schematically illustrates a state in which a detection unit 403 captures an image in front of a moving object 402 and generates a grid map 400 indicating non-travelable regions 401 indicating the presence of obstacles and the other regions (travelable regions).

The map generation unit 303 shifts the grid map 400 according to the movement of the moving object 100. The map generation unit 303 assigns the non-travelable region 401 to a corresponding grid in the grid map 400 according to a recognition result of the image information processing unit 302. For example, in a case where it is recognized that a target object is present at a predetermined height (for example, height at which the moving object 100 cannot advance) from the ground surface, the map generation unit 303 sets a region corresponding to a position at which the target object is recognized as a non-travelable region. The map generation unit 303 generates the grid map by adding, deleting, or updating the non-travelable region 401 along with the movement of the moving object 100. The map generation unit 303 updates the travelable region and the non-travelable region 401 at a predetermined time interval. In the present embodiment, for example, the map generation unit 303 sets a static obstacle in the non-travelable region 401. In the following embodiment, a case where collision with the static obstacle is avoided using the grid map in a dynamic window approach (DWA) to be described later will be described as an example. However, the avoidance of the collision with the static obstacle may be performed by another method (for example, a method using a result of object recognition) without generating the grid map.

The model processing unit 304 calculates a reward of a route generated by the route generation unit 305 by using a reward function that outputs a reward for an action of the moving object. The reward function includes a reward function for implementing a policy corresponding to an action of the operator. Such a reward function includes a reward function estimated (restored) by inverse reinforcement learning.

In the present embodiment, a case where the model processing unit 304 estimates the reward function by the inverse reinforcement learning will be described as an example. However, the estimation of the reward function by the inverse reinforcement learning described here may be executed by an external device (for example, an external server) outside the moving object 100, and information on the estimated reward function may be provided to the model processing unit 304 (the moving object 100). In a case where the estimation of the reward function by the inverse reinforcement learning is executed by the external device outside the moving object 100, expert data 501 and a replay buffer 502, which will be described later, may be stored in the external device.

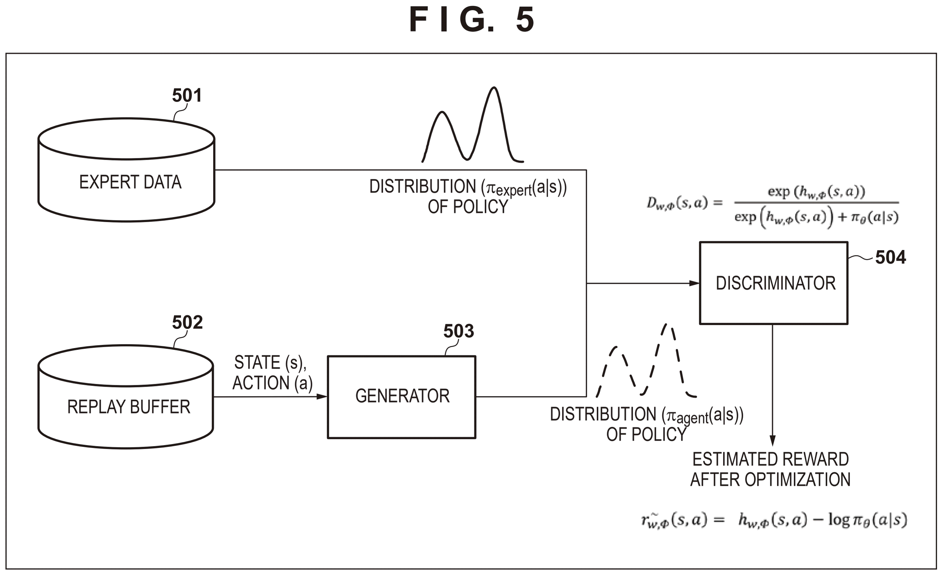

With reference to FIG. 5, the inverse reinforcement learning for estimating (restoring) the reward function will be described. In the present embodiment, a case where an off-policy inverse reinforcement learning method is used will be described as an example of a method of the inverse reinforcement learning for estimating the reward function. In reward estimation by the off-policy inverse reinforcement learning, distribution matching and adversarial training are used. An action of the operator and past experience of an agent can be used for learning of a policy and a reward so that the sample efficiency is high. Note that the present embodiment is not limited to the off-policy inverse reinforcement learning method as long as the reward function can be estimated from the action of the operator, and another inverse reinforcement learning method may be used. In addition, processing (including processing of a generator 503 and a discriminator 504) described with reference to FIG. 5 is implemented by the control unit 130 developing and executing the program stored in the storage device 135 in the memory device of the control unit 130.

The expert data 501 includes data of a trajectory of an action in a case where the operator (expert) operates the moving object 100 to reach a target position (goal) while avoiding collision with an obstacle. Examples of the obstacle here may include a moving pedestrian and other traffic participants. Examples of the expert data 501 include data of the trajectory of the action when the operator operates the moving object 100 to change the velocity and the angular velocity of the moving object 100. Examples of the operation by the operator may include a steering operation and an acceleration/deceleration operation of the moving object 100. The operation by the operator may be a steering operation and an acceleration/deceleration operation at the time of actually riding on the moving object 100. In addition, the operation by the operator may be a steering operation and an acceleration/deceleration operation performed by the operator with a joystick or the like in a simulation environment virtually simulating an operation of the moving object 100. The expert data 501 may include data in which each state in the environment is associated with an action of the operator in each state.

The model processing unit 304 acquires a distribution πₑₓₚₑᵣₜ(a|s) of a policy of the expert from the expert data 501 (data of the trajectory of the moving object) using, for example, a known technique. Here, a represents an action, and s represents a state of the environment.

The replay buffer 502 includes data in which each state of the environment is associated with the action of the agent of the reinforcement learning in each state. The replay buffer 502 includes, for example, data of the trajectory of the action when the agent changes the velocity and the angular velocity of the moving object 100. The replay buffer 502 may include data in which each state in the environment is associated with the action of the agent in each state. The expert data 501 and the replay buffer 502 may be stored in, for example, the memory device of the control unit 130.

The generator 503 generates a distribution π_{agent}(a|s) of a policy of the agent based on the state (s) and the action (a) in the replay buffer 502. The generator 503 is configured using, for example, a neural network for generation.

The discriminator 504 receives either the distribution πₑₓₚₑᵣₜ(a|s) of the policy of the expert or the distribution π_{agent}(a|s) of the policy of the agent, and discriminates whether the distribution of the policy is the distribution of the policy of the expert or the distribution of the policy of the agent. The discriminator 504 is configured using, for example, a neural network for discrimination.

When the discriminator 504 is expressed as D_{w,Φ}(s, a), the discriminator can be calculated according to Formula (1) using h_{w,Φ}(s, a) and the agent policy πθ(a|s). Here, h_{w,Φ}(s, a) is expressed by a weight parameter w of a neural network and a feature function Φ of the state s and the action a, and is expressed according to Formula (2). The reward function is expressed as r_{w}(s, a), and a reward shaping term in consideration of a change from the state s to a state s' is expressed as γg_{Φ}(s') - g_{Φ}(s).
[Mathematical Formula 1] ${D}_{w , Φ} \left(s, a\right) = \frac{exp \left({h}_{w , Φ}\left(s, a\right)\right)}{exp \left({h}_{w , Φ}\left(s, a\right)\right) + {π}_{θ} \left(\left.a\right|s\right)}$ (1)
[Mathematical Formula 2] ${h}_{w , Φ} \left(s, a\right) = {r}_{w} \left(s, a\right) + {γg}_{Φ} \left(s′\right) - {g}_{Φ} \left(s\right)$ (2)

The model processing unit 304 updates the weight of the neural network of the generator 503 such that the discriminator 504 cannot discriminate between the distribution of the policy of the expert and the distribution of the policy generated by the generator 503. In addition, the model processing unit 304 updates the weight of the neural network of the discriminator 504 so as to reduce an error in a discrimination result of the discriminator 504. When the neural networks of the generator 503 and the discriminator 504 are optimized by repetition of such processing, the distribution of the policy of the agent generated by the generator 503 becomes a distribution extremely close to the distribution of the policy of the expert. That is, the agent can act according to the policy similar to the policy taken by the expert.

After the neural networks of the generator 503 and the discriminator 504 are optimized, an estimated (restored) reward function r^{~}_{w,Φ}(s, a) is expressed by Formula (3).
[Mathematical Formula 3] ${r}_{w , Φ}^{∼} \left(s, a\right) = {h}_{w , Φ} \left(s, a\right) - {logπ}_{θ} \left(\left.a\right|s\right)$ (3)

Furthermore, a reward function r_{w,Φ}(s, a) used by the agent is calculated according to Formula (4) from Formulas (2) and (3). That is, the reward function r_{w,Φ}(s, a) used by the agent includes the estimated reward function r^{~}_{w,Φ}(s, a) and the reward shaping term, and here, the reward shaping term includes logπ_{θ}(a|s) which is an entropy regularization term. A learned policy is expressed by π_{θ}(a|s), which is also a policy corresponding to an action of the expert (operator). Therefore, it can be said that this reward shaping term is based on the policy corresponding to the action of the expert (operator) after the generator 503 and the discriminator 504 are optimized. This entropy regularization term is advantageous in the case of calculating a reward for a state and an action that are not experienced (that is, for which there is no data). In such a set of the state and the action, the policy π_{θ}(a|s) decreases, so that a value of the reward can be appropriately reduced.
[Mathematical Formula 4] ${r}_{w , Φ} \left(s, a\right) = {r}_{w , Φ}^{∼} \left(s, a\right) + {logπ}_{θ} \left(\left.a\right|s\right)$ (4)

The model processing unit 304 executes processing in an inference stage using the learned reward function in addition to processing in a learning stage of estimating the reward function by the inverse reinforcement learning. The processing in the inference stage is executed when the route generation unit 305 calculates a reward for each of trajectories of the generated traveling route. Processing of calculating the reward for each of the trajectories will be described later.

The route generation unit 305 generates a route (traveling route) on which the moving object 100 travels. The route generation unit 305 uses, for example, the DWA to generate the traveling route. By the DWA method, the route generation unit 305 can generate a route on which the moving object 100 travels in consideration of constraints such as kinematics and acceleration.

For example, the route generation unit 305 determines combinations of the velocity and the angular velocity of the moving object 100, and generates (acquires) trajectories of various traveling routes obtained by the respective combinations. Then, the route generation unit 305 selects a candidate trajectory that satisfies a constraint condition from among a plurality of candidate trajectories.

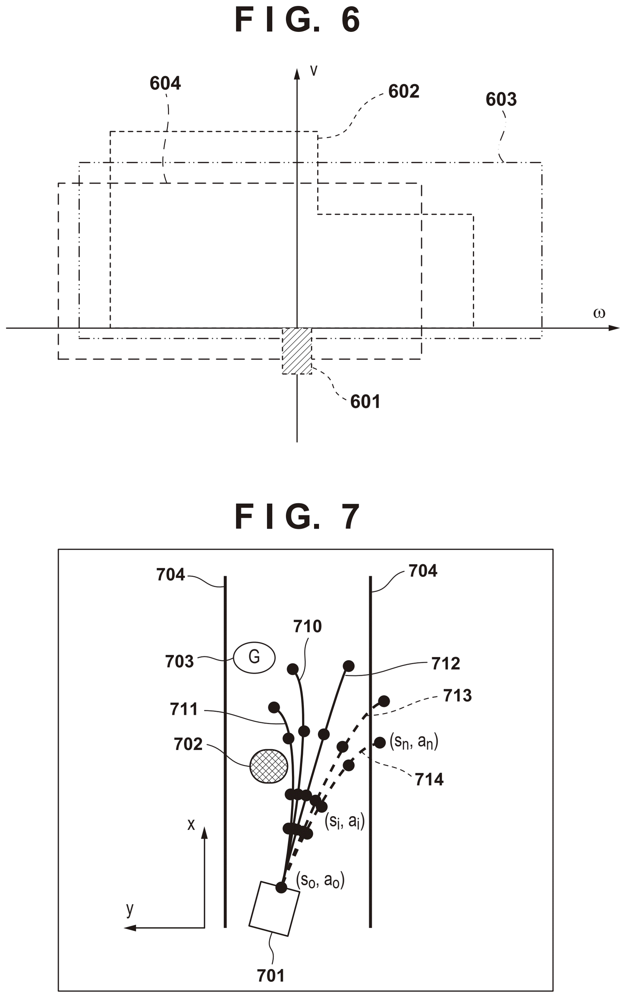

FIG. 6 schematically illustrates ranges (windows) satisfying constraint conditions of the velocity and the angular velocity of the moving object used by the route generation unit 305. A horizontal axis ω in FIG. 6 represents the angular velocity of the moving object 100, and a vertical axis v in FIG. 6 represents the velocity of the moving object 100. A moving object 601 is schematically illustrated at the origin. An obstacle window 602 indicates a range of the velocity and the angular velocity for preventing the moving object 100 from colliding with an obstacle. The obstacle window 602 may include, for example, a range of the velocity and the angular velocity for preventing collision with the non-travelable regions 401 illustrated in FIG. 4. In addition, the obstacle window 602 may include a range of the velocity and the angular velocity for preventing collision with an edge 704 of a sidewalk in an example of FIG. 7 described later.

A velocity constraint window 603 indicates a range of the velocity of the moving object 100 determined from a travelable velocity of the moving object 100. An acceleration constraint window 604 indicates a range of the velocity and the angular velocity of the moving object 100 determined from an acceleration (limit acceleration) at which the moving object 100 can accelerate. In the DWA, combinations of the velocity and the angular velocity included in all the windows of the obstacle window 602, the velocity constraint window 603, and the acceleration constraint window 604 are the velocity and the angular velocity that satisfy all the three constraint conditions.

The route generation unit 305 can select, from among the plurality of candidate trajectories, a candidate trajectory obtained by a combination of the velocity and the angular velocity satisfying all the above constraint conditions. In this way, it is possible to select the candidate trajectory that achieves both safety and ride comfort of the moving object and collision avoidance.

On the other hand, the route generation unit 305 may select a candidate trajectory that satisfies at least one constraint condition according to an application. For example, the route generation unit 305 may select a candidate trajectory not causing collision with an obstacle from among the plurality of candidate trajectories, or may select a candidate trajectory that satisfies an acceleration constraint from among the plurality of candidate trajectories. In this case, the DWA can be executed particularly for control for the collision avoidance with a specific obstacle that is static, and other algorithms can be combined for generation of a trajectory focusing on the ride comfort and generation of a trajectory for avoiding collision with a dynamic obstacle.

The route generation unit 305 calculates a reward by the reward function for each of the plurality of selected candidate trajectories, and determines a trajectory with the maximum reward (specific candidate trajectory) as the route of the moving object 100.

The route generation processing by the route generation unit 305 will be described with reference to FIG. 7. In the example illustrated in FIG. 7, a moving object 701 travels in a sidewalk region to move to a target position 703 while avoiding collision with edges 704 of the sidewalk and a pedestrian 702.

The route generation unit 305 determines combinations of the velocity and the angular velocity of the moving object 100, and acquires a plurality of candidate trajectories 710, 711, 712, 713, and 714 respectively obtained by the combinations. Each candidate trajectory corresponds to each case where the state changes from the latest state s₀ to a state sₙ and the agent takes actions a₀,..., aᵢ,..., and aₙ in the respective states.

The route generation unit 305 selects a candidate trajectory that satisfies a constraint condition from among the plurality of candidate trajectories by the above-described DWA. For example, the route generation unit 305 selects the candidate trajectories 710, 711, and 712 excluding the candidate trajectories 713 and 714, which may cause collision with the edge 704 of the sidewalk, from among the plurality of candidate trajectories.

Next, the route generation unit 305 determines, as the route of the moving object 100, a specific candidate trajectory using each of the selected candidate trajectories and the reward function r_{w,Φ}(s, a) according to Formula (4). Specifically, according to Formula (5), the route generation unit 305 sequentially inputs sets of a state in the candidate trajectory 710 and an action in the state (for example, the state s₀ and the action a₀) from 0 to n into the reward function r_{w,Φ}(s, a), and calculates a sum Rₜᵣₐⱼ(s, a) of rewards for the candidate trajectory.
[Mathematical Formula 5] ${R}_{traj} \left(s, a\right) = {\sum }_{i}^{n} {r}_{w , Φ} \left({s}_{i}, {a}_{i}\right)$ (5)

The route generation unit 305 determines, as the route of the moving object 100, a candidate trajectory having the highest sum of rewards among the sums Rₜᵣₐⱼ(s, a) of rewards obtained for the selected candidate trajectories according to Formula (6). At this time, the route generation unit 305 determines the action a (action a₀) for traveling on the candidate trajectory with the highest reward.
[Mathematical Formula 6] $a * = argmin \left[-{R}_{traj}\left(s, a\right)\right]$ (6)

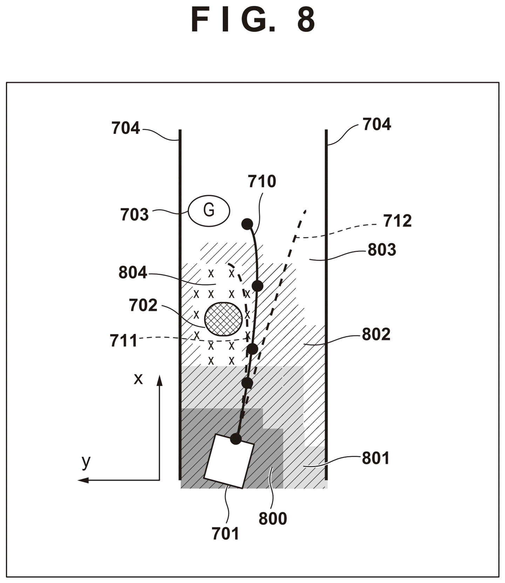

FIG. 8 schematically illustrates an example of a distribution of rewards around the moving object 100 traveling on the sidewalk and a candidate trajectory with the highest reward determined by the route generation unit 305. As described above, the distribution of rewards around the moving object 100 is a distribution of rewards estimated by the inverse reinforcement learning described above. The distribution of rewards is illustrated in stages for description. The size of the reward per region is set such that region 800 > region 801 > region 803 > region 804. That is, the reward of the region 804 around the pedestrian 702 is lower than the reward of the region 802. Therefore, the candidate trajectory 710 passing through the region 802 has a higher sum of rewards than the candidate trajectory 711 passing through the region 804.

Thereafter, the route generation unit 305 determines the velocity v and the angular velocity ω which are control amounts for controlling the traveling of the moving object 100 and correspond to the determined action.

The travel control unit 306 controls the traveling of the moving object 100 (for example, controls the motors 122a and 122b) according to the control determined by the route generation unit 305.

As described above, since a model-based route generation (for example, by the DWA) is combined with an output of the reward function restored by the inverse reinforcement learning, it is possible to generate a route such that the generated route is safe and close to a route obtained by a human operation. In other words, it is possible to determine the route of the moving object based on an appropriate reward.

### <Series of Operations of Route Generation Processing in Moving Object>

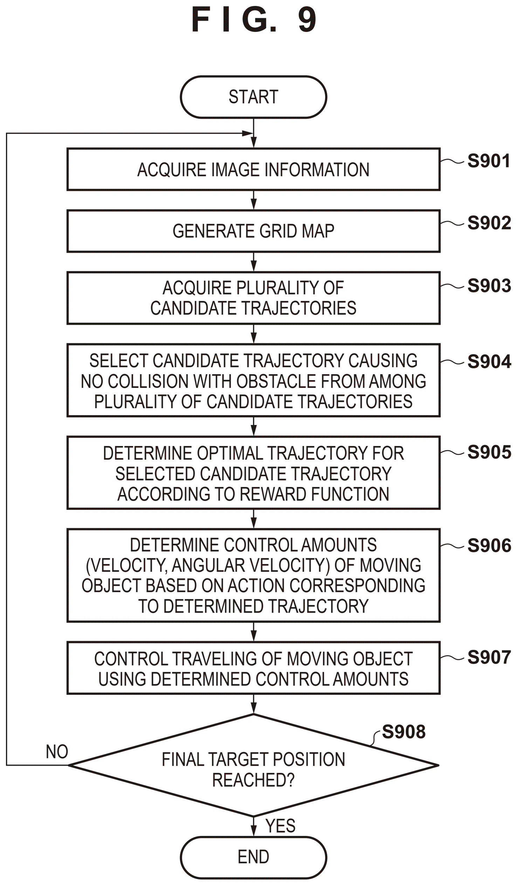

Next, a series of operations of the route generation processing in the moving object 100 will be described with reference to FIG. 9. Note that this processing is implemented by the control unit 130 loading and executing the program stored in the storage device 135 on the memory device of the control unit 130. It is assumed that the final target position is set according to a user instruction or the like at the start of this processing. In addition, it is assumed that the reward function is estimated by the inverse reinforcement learning described above before the start of this processing.

In S901, the image information processing unit 302 of the control unit 130 acquires outputs (image information) of the detection units 114 to 116. The image information processing unit 302 recognizes positions, shapes, and the like of a traveling path and an obstacle included in the image information using, for example, a deep neural network. Examples of the traveling path include a road surface on which a pedestrian and the moving object 100 are mixed, such as a sidewalk and an open space. Examples of the obstacle include various objects such as a wall or a guardrail existing at an edge of a sidewalk, a step, and a store present in the open space.

In S902, the map generation unit 303 of the control unit 130 generates the grid map described with reference to FIG. 4. As described above, the map generation unit 303 generates the grid map representing the travelable region and the non-travelable region of the moving object 100 in the vicinity of the moving object 100 based on the positions, shapes, and the like of the traveling path and the obstacle recognized by the image information processing unit 302.

In S903, the route generation unit 305 of the control unit 130 acquires a plurality of candidate trajectories. As described above, the route generation unit 305 determines combinations of the velocity and the angular velocity of the moving object 100, and generates (acquires) trajectories of various traveling routes obtained by the respective combinations.

In S904, the route generation unit 305 selects a candidate trajectory causing no collision with the obstacle from among the plurality of candidate trajectories. As described above, the route generation unit 305 selects the candidate trajectory not causing the collision with the obstacle from among the plurality of candidate trajectories using the windows of the DWA.

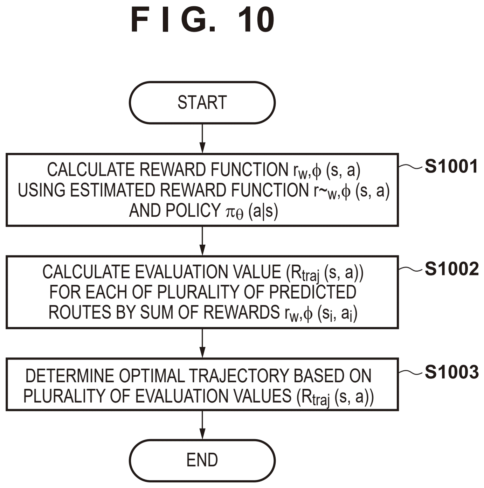

In S905, the route generation unit 305 determines the optimal trajectory for the selected candidate trajectory according to the reward function. Specific processing will be described later with reference to FIG. 10.

In S906, the route generation unit 305 determines the velocity v and the angular velocity ω, which are control amounts for controlling the traveling of the moving object 100, based on the action corresponding to the determined trajectory.

In S907, the travel control unit 306 of the control unit 130 controls the motors 122a and 122b using the control amounts (the velocity v and the angular velocity ω) determined by the route generation unit 305 to control traveling of the moving object 100.

In S908, the control unit 130 determines whether the final target position (for example, the target position 703) is reached. In a case where it is determined that the final target position is not reached, the control unit 130 returns the processing to S901 and repeats the processing. In a case where it is determined that the final target position is reached, the control unit 130 terminates the series of processing.

### <Series of Operations of Processing of Determining Optimal Trajectory of Moving Object>

Next, a series of operations of processing of determining the optimal trajectory executed by the route generation unit 305 will be described. Note that this processing is implemented by the control unit 130 loading and executing the program stored in the storage device 135 on the memory device of the control unit 130. In addition, this processing is executed when the process of S905 is started.

In S1001, as described above, the route generation unit 305 calculates the reward function r_{w,Φ}(s, a) using the estimated reward function r^{~}_{w,Φ}(s, a) and the policy π_{θ}(a|s) according to Formula (4).

In S1002, as described above, for each of the selected candidate trajectories, the route generation unit 305 sequentially inputs the sets of the state in the candidate trajectory 710 and the action in the state to a reward function r_{w,Φ}(sᵢ, aᵢ) according to Formula (5), and calculates an evaluation value (Rₜᵣₐⱼ(s, a)).

In S1003, the route generation unit 305 determines the optimal trajectory based on a plurality of the evaluation values (Rₜᵣₐⱼ(s, a)). As described above, the route generation unit 305 determines, as the route of the moving object 100 (that is, generates the route), a candidate trajectory having the highest sum of rewards among the evaluation values (Rₜᵣₐⱼ(s, a)) obtained for the selected candidate trajectories as the route of the moving object 100 (that is, generates the route) according to Formula (6). Then, the route generation unit 305 determines an action for traveling on the candidate trajectory having the highest sum of rewards. Thereafter, when the process of S1003 ends, the route generation unit 305 ends the series of processes illustrated in FIG. 10 and returns to S905 of a caller.

As described above, in the above-described embodiment, a plurality of candidate trajectories, which are candidates of a trajectory of a traveling route from a position of the moving object 100, are acquired by the DWA, and candidate trajectories not causing collision with an obstacle are selected from among the plurality of candidate trajectories. Then, a specific candidate trajectory is determined as a route of the moving object 100 using each of the selected candidate trajectories and the reward function r_{w,Φ}(s, a) that outputs a reward for an action of the moving object 100. At this time, the reward function includes a reward function (the estimated reward function r^{~}_{w,Φ}(s, a)) for implementing a policy corresponding to an action of the operator. Furthermore, the reward for each of the selected candidate trajectories is calculated using the reward function r_{w,Φ}(s, a), and a specific candidate trajectory is determined using the calculated reward. This makes it possible to determine the route of the moving object based on an appropriate reward.

Note that the configuration of the above-described control unit 130 may function in various forms as a moving object control system. For example, the moving object control system may be configured in a form in which at least a part of the above-described control unit 130 is configured on a device outside the moving object 100, for example, an external server. That is, the present embodiment is also applicable to a case where the moving object 100 is remotely controlled from a device separate from the moving object 100. Alternatively, the moving object control system may be the moving object 100, or may be incorporated in the moving object 100 (that is, may be the control unit 130). A computer program for operating the above-described moving object 100 may be a computer program for causing one or more computers to function as each unit of the moving object control system.

### <Summary of Embodiment>

### (Configuration 1)

A moving object control system that controls an operation of a moving object, the moving object control system comprising:
acquisition means for acquiring a plurality of candidate trajectories that are candidates for a trajectory of a traveling route from a position of the moving object;
selection means for selecting candidate trajectories not causing collision with an obstacle from among the plurality of candidate trajectories; and
determination means for determining a specific candidate trajectory as a route of the moving object by using each of the selected candidate trajectories and a reward function that outputs a reward for an action of the moving object,
wherein the reward function includes a reward function for implementing a policy corresponding to an action of an operator, and
the determination means calculates a reward for each of the selected candidate trajectories using the reward function, and determines the specific candidate trajectory using the calculated reward.

According to this configuration, since a model-based route generation is combined with an output of the reward function for implementing the policy corresponding to the action of the operator (restored by the inverse reinforcement learning), it is possible to generate a route such that the generated route is safe and close to a route obtained by a human operation.

### (Configuration 2)

The moving object control system according to configuration 1, wherein the determination means determines the route of the moving object by determining an action for traveling on the specific candidate trajectory.

According to this configuration, the optimal action obtained by reinforcement learning or the inverse reinforcement learning can be incorporated in the model-based route generation.

### (Configuration 3)

The moving object control system according to configuration 1 or configuration 2, wherein the reward function includes a reward function estimated by inverse reinforcement learning based on the action of the operator.

According to this configuration, it is possible to combine the output of the reward function restored by the inverse reinforcement learning with the model-based route generation.

### (Configuration 4)

The moving object control system according to any one of configuration 1 to configuration 3, wherein
the action of the operator includes a steering operation and an acceleration/deceleration operation performed by the operator, and
the reward function includes a reward function estimated by inverse reinforcement learning based on the steering operation and the acceleration/deceleration operation performed by the operator.

According to this configuration, the generated route is close to a route obtained by a human operation from the viewpoint of steering and acceleration/deceleration of the moving object.

### (Configuration 5)

The moving object control system according to any one of configuration 1 to configuration 4, wherein the reward function includes a reward function estimated by off-policy inverse reinforcement learning based on the action of the operator.

According to this configuration, the action of the operator and the past experience of an agent (generator) of the reinforcement learning can be used for learning of the policy and the reward, and the sample efficiency is increased.

### (Configuration 6)

The moving object control system according to any one of configuration 1 to configuration 5, wherein the determination means calculates an output of the reward function using the reward function for implementing the policy and a reward shaping term.

According to this configuration, the output of the reward function for each of the candidate trajectories can be adjusted, and the accuracy of the output can be improved.

### (Configuration 7)

The moving object control system according to configuration 6, wherein the reward shaping term is based on the policy corresponding to the action of the operator.

According to this configuration, in a case where a reward is calculated for a state and an action that are not experienced (that is, for which there is no data), a value of the reward can be appropriately reduced.

### (Configuration 8)

The moving object control system according to any one of configuration 1 to configuration 7, further comprising estimation means for estimating the reward function for implementing the policy by inverse reinforcement learning based on the action of the operator.

According to this configuration, the reward function can be estimated in the moving object control system.

### (Configuration 9)

The moving object control system according to any one of configuration 1 to configuration 8, further comprising:
recording means for storing the action of the operator in a storage medium; and
estimation means for estimating the reward function for implementing the policy by inverse reinforcement learning based on the action of the operator stored in the storage medium.

According to this configuration, expert data is stored in the moving object control system, and the reward function can be estimated using the expert data.

### (Configuration 10)

The moving object control system according to configuration 9, wherein the estimation means estimates the reward function by reducing a difference between a distribution of a first policy obtained from an operation by the operator and a distribution of a second policy obtained by a generator.

According to this configuration, it is possible to perform adversarial learning of a distribution of a policy based on the expert data and a distribution of a policy obtained by the generator to imitate an action of the expert.

### (Configuration 11)

A moving object control system comprising: a moving object; and an external device configured to control an operation of the moving object,
wherein the moving object includes:
   acquisition means for acquiring a plurality of candidate trajectories that are candidates for a trajectory of a traveling route from a position of the moving object;
   selection means for selecting candidate trajectories not causing collision with an obstacle from among the plurality of candidate trajectories; and
   determination means for determining a specific candidate trajectory as a route of the moving object based on each of the selected candidate trajectories and a reward function that outputs a reward for an action of the moving object,
   the reward function includes a reward function for implementing a policy corresponding to an action of an operator,
   the determination means calculates a reward for each of the selected candidate trajectories using the reward function, and determines the specific candidate trajectory using the calculated reward, and
the external device includes
   estimation means for estimating the reward function for implementing the policy by inverse reinforcement learning based on the action of the operator.

According to this configuration, the reward function is estimated in the moving object control system, and the moving object control system can generate a route such that the generated route is safe and close to the route obtained by the human operation by combining the output of the obtained reward function with the model-based route generation.

### (Configuration 12)

The moving object control system according to configuration 11, wherein the estimation means estimates the reward function by reducing a difference between a distribution of a first policy obtained from an operation by the operator and a distribution of a second policy obtained by a generator.

According to this configuration, it is possible to perform the adversarial learning of the distribution of the policy based on the expert data and the distribution of the policy obtained by the generator by using calculation resources of an external device to imitate the action of the expert.

### (Configuration 13)

The moving object control system according to configuration 11 or configuration 12, wherein the estimation means estimates the reward function for implementing the policy by off-policy inverse reinforcement learning based on the action of the operator.

According to this configuration, the action of the operator and the past experience of the agent (generator) of the reinforcement learning can be used for learning of the policy and the reward by using the calculation resources of the external device, and the sample efficiency is increased.

### (Configuration 14)

A moving object comprising:
acquisition means for acquiring a plurality of candidate trajectories that are candidates for a trajectory of a traveling route from a position of the moving object;
selection means for selecting candidate trajectories not causing collision with an obstacle from among the plurality of candidate trajectories;
determination means for determining a specific candidate trajectory as a route of the moving object by using each of the selected candidate trajectories and a reward function that outputs a reward for an action of the moving object; and
control means for controlling drive means for traveling on the determined route,
wherein the reward function includes a reward function for implementing a policy corresponding to an action of an operator, and
the determination means calculates a reward for each of the selected candidate trajectories using the reward function, and determines the specific candidate trajectory using the calculated reward.

According to this configuration, traveling is possible on the generated route that is safe and close to the route obtained by the human operation.

### (Configuration 15)

A control method of a moving object control system that controls an operation of a moving object, the control method comprising:
acquiring a plurality of candidate trajectories that are candidates for a trajectory of a traveling route from a position of the moving object;
selecting candidate trajectories not causing collision with an obstacle from among the plurality of candidate trajectories; and
determining a specific candidate trajectory as a route of the moving object by using each of the selected candidate trajectories and a reward function that outputs a reward for an action of the moving object,
wherein the reward function includes a reward function for implementing a policy corresponding to an action of an operator, and
the determining the specific candidate trajectory includes calculating a reward for each of the selected candidate trajectories using the reward function, and determining the specific candidate trajectory using the calculated reward.

According to this configuration, since a model-based route generation is combined with an output of the reward function for implementing the policy corresponding to the action of the operator (restored by the inverse reinforcement learning), it is possible to generate a route such that the generated route is safe and close to a route obtained by a human operation.

The invention is not limited to the foregoing embodiments, and various variations/changes are possible within the spirit of the invention.

## Claims

1. A moving object control system that controls an operation of a moving object, the moving object control system comprising:
acquisition means for acquiring a plurality of candidate trajectories that are candidates for a trajectory of a traveling route from a position of the moving object;
selection means for selecting candidate trajectories not causing collision with an obstacle from among the plurality of candidate trajectories; and
determination means for determining a specific candidate trajectory as a route of the moving object by using each of the selected candidate trajectories and a reward function that outputs a reward for an action of the moving object,
wherein the reward function includes a reward function for implementing a policy corresponding to an action of an operator, and
the determination means calculates a reward for each of the selected candidate trajectories using the reward function, and determines the specific candidate trajectory using the calculated reward.

2. The moving object control system according to claim 1, wherein the determination means determines the route of the moving object by determining an action for traveling on the specific candidate trajectory.

3. The moving object control system according to any one of the preceding claims, wherein the reward function includes a reward function estimated by inverse reinforcement learning based on the action of the operator.

4. The moving object control system according to any one of the preceding claims, wherein
the action of the operator includes a steering operation and an acceleration/deceleration operation performed by the operator, and
the reward function includes a reward function estimated by inverse reinforcement learning based on the steering operation and the acceleration/deceleration operation performed by the operator.

5. The moving object control system according to any one of the preceding claims, wherein the reward function includes a reward function estimated by off-policy inverse reinforcement learning based on the action of the operator.

6. The moving object control system according to any one of the preceding claims, wherein the determination means calculates an output of the reward function using the reward function for implementing the policy and a reward shaping term.

7. The moving object control system according to claim 6, wherein the reward shaping term is based on the policy corresponding to the action of the operator.

8. The moving object control system according to any one of the preceding claims, further comprising estimation means for estimating the reward function for implementing the policy by inverse reinforcement learning based on the action of the operator.

9. The moving object control system according to any one of the preceding claims, further comprising:
recording means for storing the action of the operator in a storage medium; and
estimation means for estimating the reward function for implementing the policy by inverse reinforcement learning based on the action of the operator stored in the storage medium.

10. The moving object control system according to claim 9, wherein the estimation means estimates the reward function by reducing a difference between a distribution of a first policy obtained from an operation by the operator and a distribution of a second policy obtained by a generator.

11. A moving object control system comprising: a moving object; and an external device configured to control an operation of the moving object,
wherein the moving object includes:
acquisition means for acquiring a plurality of candidate trajectories that are candidates for a trajectory of a traveling route from a position of the moving object;
selection means for selecting candidate trajectories not causing collision with an obstacle from among the plurality of candidate trajectories; and
determination means for determining a specific candidate trajectory as a route of the moving object based on each of the selected candidate trajectories and a reward function that outputs a reward for an action of the moving object,
the reward function includes a reward function for implementing a policy corresponding to an action of an operator,
the determination means calculates a reward for each of the selected candidate trajectories using the reward function, and determines the specific candidate trajectory using the calculated reward, and
the external device includes
estimation means for estimating the reward function for implementing the policy by inverse reinforcement learning based on the action of the operator.

12. The moving object control system according to claim 11, wherein the estimation means estimates the reward function by reducing a difference between a distribution of a first policy obtained from an operation by the operator and a distribution of a second policy obtained by a generator.

13. The moving object control system according to claim 11 or 12, wherein the estimation means estimates the reward function for implementing the policy by off-policy inverse reinforcement learning based on the action of the operator.

14. A moving object comprising:
acquisition means for acquiring a plurality of candidate trajectories that are candidates for a trajectory of a traveling route from a position of the moving object;
selection means for selecting candidate trajectories not causing collision with an obstacle from among the plurality of candidate trajectories;
determination means for determining a specific candidate trajectory as a route of the moving object by using each of the selected candidate trajectories and a reward function that outputs a reward for an action of the moving object; and
control means for controlling drive means for traveling on the determined route,
wherein the reward function includes a reward function for implementing a policy corresponding to an action of an operator, and
the determination means calculates a reward for each of the selected candidate trajectories using the reward function, and determines the specific candidate trajectory using the calculated reward.

15. A control method of a moving object control system that controls an operation of a moving object, the control method comprising:
acquiring a plurality of candidate trajectories that are candidates for a trajectory of a traveling route from a position of the moving object;
selecting candidate trajectories not causing collision with an obstacle from among the plurality of candidate trajectories; and
determining a specific candidate trajectory as a route of the moving object by using each of the selected candidate trajectories and a reward function that outputs a reward for an action of the moving object,
wherein the reward function includes a reward function for implementing a policy corresponding to an action of an operator, and
the determining the specific candidate trajectory includes calculating a reward for each of the selected candidate trajectories using the reward function, and determining the specific candidate trajectory using the calculated reward.

16. A computer program that includes a command for causing a computer to execute a control method of a moving object control system for controlling an operation of a moving object, the control method comprising:
acquiring a plurality of candidate trajectories that are candidates for a trajectory of a traveling route from a position of the moving object;
selecting candidate trajectories not causing collision with an obstacle from among the plurality of candidate trajectories; and
determining a specific candidate trajectory as a route of the moving object by using each of the selected candidate trajectories and a reward function that outputs a reward for an action of the moving object,
wherein the reward function includes a reward function for implementing a policy corresponding to an action of an operator, and
the determining the specific candidate trajectory includes calculating a reward for each of the selected candidate trajectories using the reward function, and determining the specific candidate trajectory using the calculated reward.
